# EUROPÄISCHE PATENTSCHRIFT

(11) **EP 1 833 703 B1**
(45) Veröffentlichungstag und Bekanntmachung des Hinweises auf die Patenterteilung: **06.04.2011**
(21) Anmeldenummer: 05794599.0
(22) Anmeldetag: 07.10.2005
(51) Int. Cl.: B60R 21/01

(54) **VORRICHTUNG ZUR STEUERUNG EINES ANSTEUERALGORITHMUS FÜR PERSONENSCHUTZMITTEL**
DEVICE FOR CONTROLLING A CONTROL ALGORITHM FOR A PERSONAL PROTECTION MEANS
DISPOSITIF POUR COMMANDER UN ALGORITHME DE COMMANDE POUR SYSTEME DE PROTECTION DES PERSONNES

(30) Priorität: 28.12.2004 DE 102004063082
(43) Veröffentlichungstag der Anmeldung: 19.09.2007
(73) Patentinhaber: ROBERT BOSCH GMBH, 70442 Stuttgart (DE)
(72) Erfinder: GIESEL, Ruediger, 70437 Stuttgart (DE)
(86) Internationale Anmeldenummer: PCT/EP2005/055087
(87) Internationale Veröffentlichungsnummer: WO 2006/069821

(56) Entgegenhaltungen:
- WO-A-2004/061405
- DE-A1- 10 101 253
- DE-A1- 10 307 343

## Beschreibung

### Stand der Technik

Die Erfindung geht aus von einem Verfahren zur Steuerung eines Ansteueralgorithmus für Personenschutzmittel nach der Gattung des unabhängigen Patentanspruchs.

Aus DE 101 01 253 A1 ist ein Fahrzeugsteuerungscomputergerät mit Selbstdiagnosefunktion bekannt. Dabei wird ein Mikrocomputer nach Riscbauart verwendet. Wird anhand der Diagnose ein entsprechender Betriebsfall erkannt, d. h. eine Abnormalität, wird ein Warnlicht eingeschaltet oder dem Benutzer die Abnormalität mittels eines Abnormalitätscodes angezeigt.

### Vorteile der Erfindung

Das erfindungsgemäße Verfahren zur Steuerung eines Ansteueralgorithmus für Personenschutzmittel mit den Merkmalen des unabhängigen Patentanspruchs hat den Vorteil, dass ein Steuerinstanz für den Ansteueralgorithmus vorliegt, die Zustandsgrößen des Gesamtsystems insbesondere der Software des Steuergeräts für Personenschutzmittel überwacht. Damit werden insbesondere Konflikte vermieden, die bei unabhängigen Modulen vorliegen könnten. Die vorliegende Vorrichtung ist insbesondere leicht erweiter- und adaptierbar.

Kern der Erfindung ist es, dass Zustandsdaten des Steuergeräts von einem Systemmanager ausgewertet und interpretiert werden und in Abhängigkeit davon wenigstens ein Element des Ansteueralgorithmus freigegeben oder gesperrt wird. Ein Ansteueralgorithmus für Personenschutzmittel hat verschiedene Module. Es gibt Module zum Ansteuern von mehrstufigen Airbags von Knie- Kopf-, Seitenairbags, Toraxairbags oder auch von Gurtstraffern. Eine weitere Einteilung lässt sich hinsichtlich der Crasharten, also Front-, Schräg-, Seite- oder Heckcrash vornehmen. Auch für den Überrollvorgang ist ein eigenes Element im Ansteueralgorithmus vorgesehen. Durch das erfindungsgemäße Verfahren ist es demnach möglich, dass je nach Zustandsgrößen des Steuergeräts diese einzelnen Elemente aktiviert bzw. deaktiviert werden. Zu den Zustandsgrößen gehören Sensordaten und Sensorzustandsdaten, Informationen über die Energieversorgung, Daten von einem Watchdog und Flaggen, die verschiedene Systemzustände kennzeichnen. Weitere Zustandsgrößen sind hier möglich. Ein wichtiger Vorteil ist, dass Zustände, die im System parallel auftreten können, durch das erfindungsgemäße Verfahren durch eine einzige Instanz überwacht werden. Es wird vermieden, parallele Funktionen ablaufen zu lassen, die beispielsweise entgegengesetzte Befehle starten, wie ein Element eine des Ansteueralgorithmus freizugeben und zu sperren. Es ist klar, dass die erfindungsgemäße Vorrichtung als Software realisiert ist, es ist jedoch möglich, dass Elemente der Vorrichtung als Hardware vorliegen.

Das erfindungsgemäße Verfahren gibt einen Systemzustand in AbhängigKeit von dem wenigstens einen Zustandsdatum aus. Diese Ausgabe an beispielsweise andere Algorithmen oder auch externe Überwachungsanfragen wie Fernwartung oder in einer Werkstatt kann entweder immer erfolgen oder auf Anfrage. Dieser Systemzustand kann dann als Eingangsgröße für andere Funktionen verwendet werden.

Durch die in den abhängigen Ansprüchen aufgeführten Maßnahmen und Weiterbildungen sind vorteilhafte Verbesserungen des im unabhängigen Patentanspruch angegebenen Verfahrens zur Steuerung eines Ansteueralgorithmus für Personenschutzmittel möglich.

Weiterhin ist es vorteilhaft, dass in Abhängigkeit von der Steuerung, die das Verfahren am Ansteueralgorithmus durchführt, wenigstens eine Flagge gesetzt wird. Diese Flagge zeigt an, dass Teile oder der ganze Ansteueralgorithmus gesperrt oder freigegeben sind. Die Flagge selbst kann dann wieder als Zustandsdatum verwendet werden, um den Systemzustand insgesamt zu bestimmen und Teile des Ansteueralgorithmus wiederum zu sperren oder freizugeben. Diese Flaggen werden vorzugsweise im Arbeitsspeicher gesetzt.

Weiterhin ist es vorteilhaft, dass das Zustandsdatum zeitdynamisch zur Steuerung des wenigstens einen Elements ausgewertet wird. Zeitdynamik bedeutet hier, wie lange gewisse Zustände andauern, beispielsweise das Fehlen einer Energieversorgung oder der Zustand bestimmter Sensoren.

Darüber hinaus ist es vorteilhaft, dass das Verfahren die Steuerung des wenigstens einen Elements in wenigstens einem Speicher durchführt. Da es sich bei dem Verfahren üblicherweise um ein Stück Software handelt, läuft die Funktion in einem Speicher, beispielsweise in einem RAM-Baustein ab. Aber auch andere Speicher können hier zusätzlich oder anstatt verwendet werden. Insbesondere ist bei dem Speicher ein Speichermanager vorgesehen, der derart konfiguriert ist, dass er einen für eine Funktion notwendigen Speicherbereich nur für einen jeweiligen Speicherzugriff reserviert und danach sofort wieder freigibt. Dadurch kann ein Speichersharing realisiert werden und Speicher effizienter genutzt werden. Dies ist insbesondere bei einem RAM-Speicher von Vorteil. Der Vorteil besteht darin, dass man innerhalb einer Funktion nicht nur auf die zuvor festgelegten RAM-Adressen zugreifen kann, sondern RAM-Bereiche, die aktuell nicht genutzt werden, belegen kann und somit auf einen größeren virtuellen RAM-Bereich zugreifen kann. Unter Funktionen sind hier andere Softwarefunktionen zu verstehen, die konkurrierend auf den RAM-Speicher zugreifen. Konkurrieren können hier beispielsweise die Vorrichtung und der Ansteueralgorithmus.

### Zeichnung

Ausführungsbeispiele der Erfindung sind in der Zeichnung dargestellt und werden in der nachfolgenden Bezeichnung näher erläutert.

Es zeigen
Figur 1 ein Blockschaltbild einer Vorrichtung,
Figur 2 ein Blockschaltbild eines Steuergeräts für Personenschutzmittel und
Figur 3 die Speichersharingfunktion.

### Beschreibung

Es wird vorgeschlagen, dass das gesamte Personenschutzsystem also Airbags, Gurtstraffer und Fußgängerschutzmittel sowie deren Ansteuerung softwaremäßig durch das erfindungsgemäße Verfahren gesteuert werden und zwar hinsichtlich der Überwachung und Kontrolle der Systemzustände. Damit liegt eine Struktur vor, um die Qualität der Gesamtsoftware dahingehend zu verbessern, dass nicht Systemzustände auftreten können, die parallel auftreten und gegenseitig keine Kontrolle erfahren, beispielsweise eine erste Funktion sagt, dass der Ansteueralgorithmus gesperrt wird, während eine zweite Funktion den Ansteueralgorithmus freigeben möchte. Darüber hinaus ist es mit dem erfindungsgemäßen Verfahren möglich, dass baukastenmäßig unterschiedliche Projekte mit einem Basisteil der für alle Projekte gleich ist sowie einem kundenspezifischen Teil, der projektabhängig ist, realisiert werden kann.

Das erfindungsgemäße Verfahren überwacht alle Systemzustände der Gesamtsoftware. Dadurch werden keine konkurrierenden Systemzustände das System instabil machen.

Das erfindungsgemäße Verfahren als ein Systemzustandsmanager hat folgende Grundstruktur:
Funktion 1 (Systeminput) betrifft Zustandsdaten des Steuergeräts. Durch die Funktion 1 ist die Schnittstelle realisiert, um dem Verfahren diese Systemzustände mitzuteilen, z. B., ob die Energieversorgung runtergefahren wurde oder ob ein Sensorfehler vorliegt oder ob eine Initialisierung aktiv ist oder ob Diagnoseanforderungen bezüglich des Steuergeräts vorliegen. Die Funktion 1 weist eine Funktionsschnittstelle auf, wobei über diese Schnittstelle in einem Array ein Bit gesetzt wird. Damit werden dem Systemzustandsmanager die aktuellen Zustände im Steuergerät mitgeteilt.
Funktion 2 liefert einem anderen Modul oder User Statusinformationen über den Systemzustand z. B., dass der Ansteueralgorithmus gerade gesperrt ist.
Funktion 3 stellt die Verwaltung und Berechnung der Systemzustände anhand der Zustandsdaten des Steuergeräts dar. Z. B., wenn ein Systemereignis x ein weiteres Systemereignis y und ein drittes Systemereignis z eingespeist werden, muss die Systemreaktion a erfolgen. Hier findet also die eigentliche Auswertung statt. Diese Auswertung hat dann zum Ergebnis, ob Teile des Ansteueralgorithmus, gesperrt oder freigegeben werden. Folgende Überschriften zeigen, welche Modi durch entsprechende Zustandsdaten in einem Basisteil des erfindungsgemäßen Verfahrens erzeugt werden können, was dann wiederum durch Nutzung von Funktionsschnittstellen anderer Module in Aktionen umgesetzt werden kann. Z. B., wenn die Zustandsdaten derart sind, dass der Systemzustandsmanager einen Poweroffmode erkennt, es liegt also keine Batteriespannung mehr vor, wird als Systemreaktion der Ansteueralgorithmus abgeschaltet, d.h. gesperrt, und zwar nach Ablauf einer gewissen Zeit unter Berücksichtigung der Energiereserve des Steuergeräts. Zusätzlich wird eine Flagge gesetzt, die über diesen Zustand informiert und somit über die Funktion 2 auslesbar ist.

Im folgenden werden die Überschriften angegeben:

| | |
|---|---|
| Idlemode | das System wird in den Idlemode gesetzt, so dass das Rückhaltesystem nicht auslösefähig ist und beispielsweise nur eine Diagnose möglich ist |
| Inimode | die Initialisierungsphase des Steuergeräts wird überwacht |
| Prodmode | Modus während der Produktion des Steuergeräts im Werk |
| Normalmode | Betriebsmode nach Initialisierung: das Gerät ist in einem auslösefähigen Betriebszustand |
| Poweroffmode | die Batteriespannung ist nicht mehr vorhanden |
| Powerbadmode | die Energiereservespannung ist nicht mehr ausreichend |
| Eculockmode | das Steuergerät ist gesperrt und damit nicht auslösefähig Trigger Path disable der Auslösepfad ist deaktiviert |
| Firingphysical | das physikalische Auslösen der Zündelemente ist unterbunden |

Funktion 3 besteht nur aus einer Funktion, die beispielsweise alle 2 Millisekunden von einem Betriebssystem aufgerufen wird mit aneinandergereihten Blöcken, die alle 2 Millisekunden durchgeführt werden.

Diese einzelnen Blöcke sind zunächst unabhängig voneinander. Durch sogenannte Verriegelungsflaggen kann das Resultat eines Modes und die anderen Modes ebenso beeinflussen, so dass z. B. im Falle dass das System in den Initialisierungsmode gesetzt wird, aufgrund entsprechender Zustandsdaten der Normalmode nicht analysiert wird.

Die Struktur der einzelnen Blöcke ist vereinfacht dargestellt wie folgt:

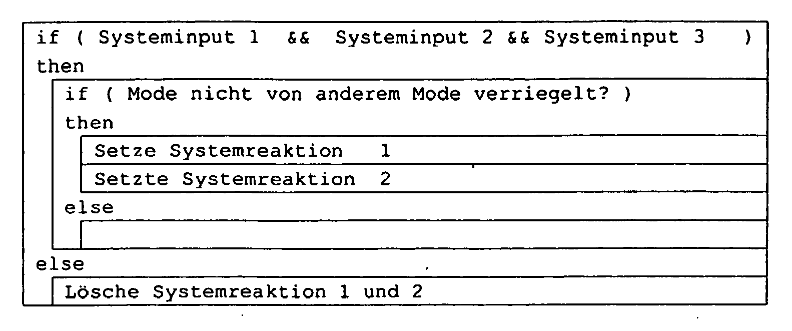

Das erfindungsgemäße Verfahren ist beispielsweise aber auch durch Timingabfragen ergänzbar. Dabei werden Zustandsgrößen dynamisch ausgewertet. Es können nicht nur statische Zustände abgefragt werden, sondern es können auch durch die Abfrage von Timern Zustände dynamisch analysiert werden. Beispiel: Wenn Zustand A 5sec anliegt und nach 3sec Zustand B eintritt, dann folgt Systemreaktion x.

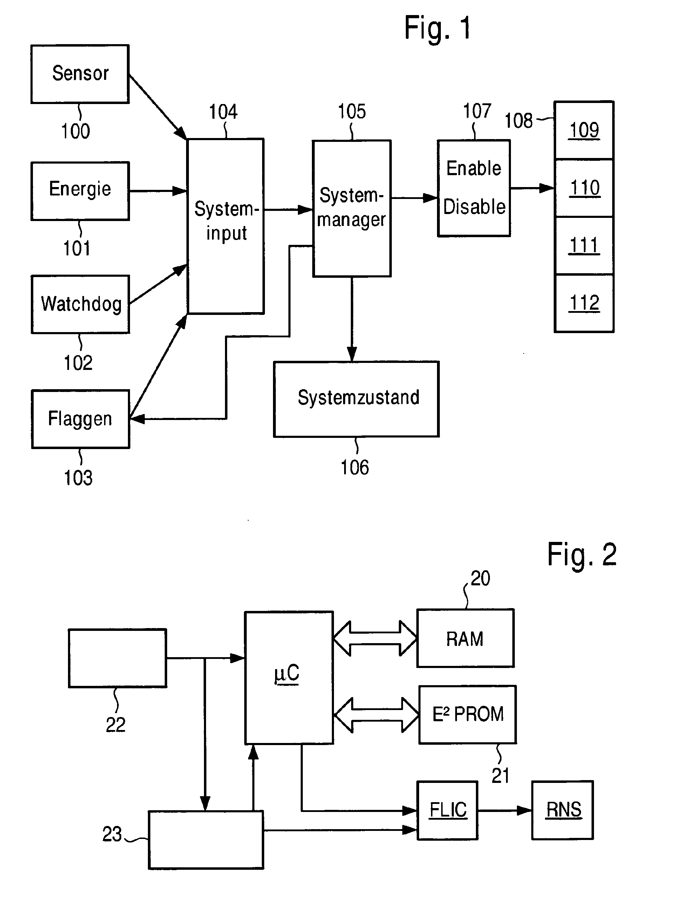

Figur 2 zeigt die Grundstruktur eines Steuergeräts. Ein µ-Prozessor µC erhält von einem einer Sensorik 22 beispielsweise eine Beschleunigungssensorik Sensordaten. Diese Daten können digital oder analog sein. Die Sensordaten der Sensorik 22 werden jedoch von einem Sicherheitshalbleiter 23 parallel ausgewertet. Der Sicherheitshalbleiter 23 hat auch Watchdogfunktionen, um den Programmfluss des µ-Controllers µC zu überwachen. In Abhängigkeit von diesen Überwachungen verriegelt der Sicherheitshalbleiter die Zündendstufen FLIC. Liefern die Sensorsignale und auch die Watchdogüberwachungen Daten, die die korrekte Funktionsweise und eine Auslösung anzeigen, dann entriegelt der Sicherheitshalbleiter 23 die Zündendstufen FLIC. Der µ-Controller µC ist ebenfalls mit den Zündendstufen FLIC verbunden. Von µ-Controller µC wird üblicherweise über einen SPI- (Serial Peripherial Interface) Bus der Zündbefehl an die Zündendstufen FLIC übertragen. Die Zündendstufen FLIC weisen üblicherweise pro Zündkreis Plus- und Minusendstufe auf, die beispielsweise getrennt voneinander durchgeschaltet werden können, um den Zündstrom der üblicherweise von einer Energiereserve zugeleitet wird zum Zündelement zuzuleiten, um das Zündelement zu zünden. Über Datenein/-ausgänge ist der µ-Controller µC mit einem RAM 20 und einem EEPROM 21 verbunden. Der Arbeitsspeicher 20 wird zur Auswertung und zum Normalbetriebs µ-Controllers µC verwendet, während der Speicher 21 zum Ablegen von Daten, die beispielsweise eine Crashrecorderfunktion verwendet wird, dient. Auf dem µ-Controller µC arbeitet die erfindungsgemäße Vorrichtung als Software.

Figur 1 erläutert anhand eines Blockschaltbilds die Funktion der erfindungsgemäßen Verfahrens. Ein Sensor 100, ein Energiemanagement 101, ein Watchdog 102 und Flaggen 103 liefern hier beispielhaft die Zustandsdaten des Steuergeräts, die über die Schnittstelle 104 als Systeminput akzeptiert werden. Über die Schnittstelle 104 erhält der Systemmanager 105 diese Zustandsdaten als Größen, die der Systemmanager nunmehr auswertet. In Abhängigkeit von dieser Auswertung wird über eine Ausgangsschnittstelle 107 eine Sperrung bzw. Freigabe des Ansteueralgorithmus für Personenschutzmittel 108 vorgenommen. Beispielhaft ist hier der Ansteueralgorithmus 108 in vier Elemente 109 bis 112 aufgeteilt. Das Element 109 soll den Frontalgorithmus, das Element 110 den Seitenalgorithmus, das Element 111 den Heckalgorithmus und das Element 112 den Überrollalgorithmus repräsentieren. Diese einzelnen Algorithmen sind individuell freigeb- bzw. sperrbar und zwar durch den Systemmanager 105. Der Systemmanager 105 setzt in Abhängigkeit vom Systemzustand, den er anhand der Zustandsdaten 100 bis 103 ermittelt, Flaggen 103. Die Flaggen dienen dann auch wieder selbst als Zustandsdaten. Diesen Systemzustand gibt der Systemmanager 105 über eine Ausgangsschnittstelle 106 aus. Dabei ist es möglich, dass diese Ausgangsschnittstelle nur durch Aufruf von anderen Modulen aktiviert wird oder dass der Systemmanager 105 diesen Systemzustand 106 dauerhaft ausgibt, beispielsweise auch über einen Speicher, in dem der Systemzustand eingetragen wird.

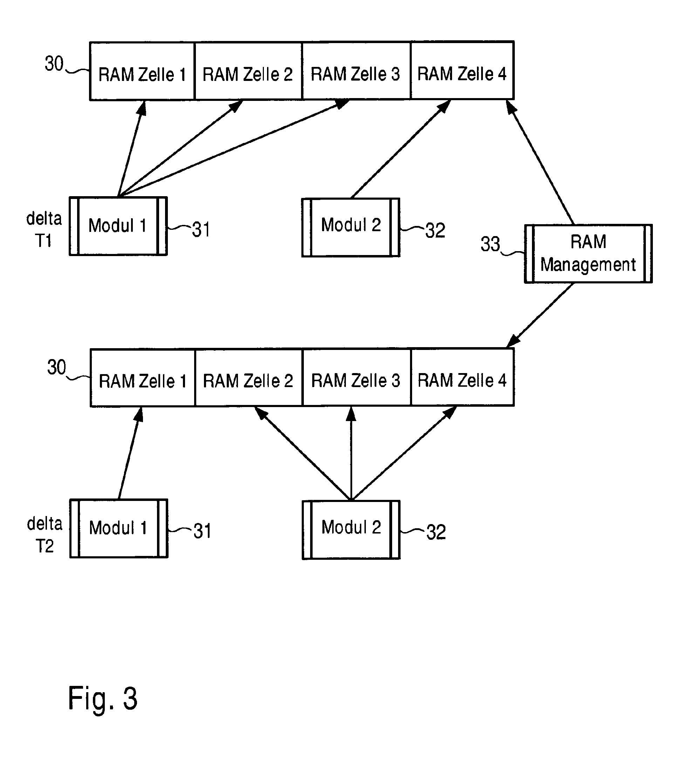

Figur 3 zeigt in einem Ausführungsbeispiel das Speichermanagement des Arbeitsspeichers 20. Hier ist ein RAM-Management 33 vorgesehen, der dafür sorgt, dass der vorhandene Arbeitsspeicher effizient ausgenutzt wird. Zum Zeitpunkt δT1 benötigt das Modul 131 im Speicherblock 30 die ersten drei Zellen 1, 2 und 3. Das Modul 2 32 benötigt die Zelle 4. Zum Zeitpunkt 8T2 benötigt im Speicherblock 30 das Modul 1 lediglich die RAM-Zelle 1 und für das Modul 2 werden die RAM-Zellen 2 und 3 frei und durch das RAM-Management 33 zugewiesen.

Durch dieses RAM-Management wird vorteilhafterweise erreicht, dass man innerhalb eines Projekts nicht nur auf die zuvor festgelegten RAM-Adressen zugreifen kann, sondern RAM-Bereiche, die aktuell nicht genutzt werden kann, belegen kann und somit auf einen größeren virtuellen RAM-Bereich zugreifen kann. Neben einem RAM-Speicher gilt das für alle anderen verwendbaren Speicher ebenso. Die grundsätzliche Vorgehensweise ist, dass ein Modul also ein Stück Software wie beispielsweise die erfindungsgemäße Vorrichtung, wenn es einen RAM-Bereich nutzen will, eine Funktion das Moduls RAM-Management 33 aufruft, z. B. mit dem Befehl RAM_Reserve (Byte/Integer/Array), womit das Modul ein Byte bzw. ein Integer oder ein ganzes Array für eine Applikation belegt. Diese Funktion bleibt solange aktiv, bis die Funktion RAM_Release (Byte/Integer) aufgerufen wird, womit der RAM-Bereich wieder für andere Applikationen freigegeben wird. Man wird diese Funktion nicht zwingender Weise für den gesamten RAM-Bereich nutzen, sondern für ausgewiesene Bereiche die nicht ständig für das System gebraucht werden z. B. Crashrecorderarrays. Im Modul RAM-Management 33 intern wird die Verwaltung diese RAM-Ressourcen stattfinden. Um eine Kontrolle über diesen Prozess zu erhalten, ist eine Partionierung möglich, bei der festgelegt wird, welche RAM-Bereiche die von einem bestimmten Modul genutzt werden durch welche anderen Module mitbenutzt werden können. Über eine Warnfunktionalität könnten mögliche Ressourcenkonflikte angezeigt werden. Damit ist ein kontrolliertes RAM-Sharing erreicht, wobei hier die Grundfunktion eines Stacks verwendet wird.

## Patentansprüche

1. Verfahren zur Steuerung eines Ansteueralgorithmus (108) für Personenschutzmittel, wobei in Abhängigkeit von wenigstens einem Zustandsdatum (100 bis 103) durch einen einzigen Systemzustandsmanager (105) eines Steuergeräts wenigstens ein Element (109 bis 112) des Ansteueralgorithmus (108) freigegeben oder gesperrt wird, wobei der Systemmanager (105) eine erste Funktion zur Bereitstellung der Zustandsdaten (100-103) eine zweite Funktion zur Vergabe eines Systemzustands und eine dritte Funktion zur Verwaltung und Berechnung des Systemzustands anhand der Zustandsdaten verwendet.

2. Verfahren nach Anspruch 1, **dadurch gekennzeichnet, dass** in Abhängigkeit von der Freigabe oder Sperrung wenigstens eine Flagge (103) gesetzt wird.

3. Verfahren nach Anspruch 2, **dadurch gekennzeichnet, dass** die wenigstens eine Flagge (103) als das wenigstens eine Zustandsdatum dient.

4. Verfahren nach einem der vorherigen Ansprüche, **dadurch gekennzeichnet, dass** die wenigstens eine Zustandsgröße (100 bis 103) zeitdynamisch zur Freigabe oder Sperrung des wenigstens einen Elements (109 bis 112) ausgewertet wird.

5. Verfahren nach einem der vorherigen Ansprüche, **dadurch gekennzeichnet, dass** die Freigabe oder die Sperrung des wenigstens einen Elements (109 bis 112) in wenigstens einem Speicher (20) durchgeführt wird.

6. Verfahren nach Anspruch 5, **dadurch gekennzeichnet, dass** ein Speichermanager (30) vorgesehen ist, der einen für die jeweilige Funktion notwendigen Speicherbereiche (30) nur für einen jeweiligen Speicherzugriff reserviert und danach wieder freigibt.

## Claims

1. Method for controlling a control algorithm (108) for personal protection means, a single system state manager (105) of a control device enabling or blocking at least one element (109 to 112) of the control algorithm (108) on the basis of at least one item of state data (100 to 103), the system manager (105) using a first function to provide the state data (100-103), using a second function to allocate a system state and using a third function to manage and calculate the system state on the basis of the state data.

2. Method according to Claim 1, **characterized in that** at least one flag (103) is set on the basis of the enabling or blocking operation.

3. Method according to Claim 2, **characterized in that** the at least one flag (103) is used as the at least one item of state data.

4. Method according to one of the preceding claims, **characterized in that** the at least one state variable (100 to 103) is evaluated dynamically over time in order to enable or block the at least one element (109 to 112).

5. Method according to one of the preceding claims, **characterized in that** the at least one element (109 to 112) is enabled or blocked in at least one memory (20).

6. Method according to Claim 5, **characterized in that** a memory manager (30) is provided, which manager reserves a memory area (30) needed for the respective function only for a respective memory access operation and then releases said memory area again.

## Revendications

1. Procédé de commande d'un algorithme d'amorçage (108) pour des moyens de protection des personnes, au moins un élément (109 à 112) de l'algorithme d'amorçage (108) étant libéré ou bloqué en fonction d'au moins une donnée d'état (100 à 103) par un unique gestionnaire d'état de système (105) d'un contrôleur, le gestionnaire de système (105) employant une première fonction pour mettre à disposition les données d'état (100 - 103), une deuxième fonction pour attribuer un état de système et une troisième fonction pour gérer et calculer l'état de système au moyen des données d'état.

2. Procédé selon la revendication 1, **caractérisé en ce qu'**au moins un marqueur (103) est défini en fonction de la libération ou du blocage.

3. Procédé selon la revendication 2, **caractérisé en ce que** l'au moins un marqueur (103) sert en tant que ladite au moins une donnée d'état.

4. Procédé selon l'une des revendications précédentes, **caractérisé en ce que** l'au moins une grandeur d'état (100 à 103) est interprétée de manière dynamique dans le temps pour libérer ou bloquer l'au moins un élément (109 à 112).

5. Procédé selon l'une des revendications précédentes, **caractérisé en ce que** la libération ou le blocage de l'au moins un élément (109 à 112) est effectué dans au moins une mémoire (20).

6. Procédé selon la revendication 5, **caractérisé en ce qu'**il est prévu un gestionnaire de mémoire (30) qui réserve une zone de mémoire (30) nécessaire pour la fonction correspondante seulement pour un accès mémoire correspondant et la libère ensuite de nouveau.
